# EUROPEAN PATENT SPECIFICATION

(11) **EP 0 474 312 B1**
(45) Date of publication and mention of the grant of the patent: **02.08.1995**
(21) Application number: 91202286.0
(22) Date of filing: 06.09.1991
(51) Int. Cl.: H02M 3/335

(54) **DC-DC converter**
Gleichstromwandler
Convertisseur continu-continu

(30) Priority: 06.09.1990 NL 9001962
(43) Date of publication of application: 11.03.1992
(73) Proprietor: N.V. Nederlandsche Apparatenfabriek NEDAP, NL-7141 DE Groenlo (NL)
(72) Inventor: Hoeksma, Gerben Simon, NL-7103 DX Winterswijk (NL)
(74) Representative: Smulders, Theodorus A.H.J., Ir.

(56) References cited:
- EP-A- 0 105 541
- EP-A- 0 279 335
- APEC'89 CONFERENCE PROCEEDINGS March 1989, BALTIMORE, MARYLAND, USA pages 413 - 422; & HENZE: 'Development of a DC-to-DC Power Converter for Distributed Power Processing'

## Description

This invention relates to a DC-DC converter of the flyback type. This type of converter is known, for instance, from "Philips application-information 469: Survey of converter circuits for switched mode power supplies" by H.E. Jansson, August 1974. A widely used type of converter is the self-oscillating flyback converter, described for instance in the publication "Flexible, low-cost, self-oscillating power supply concept using new ETD 34 two-part coil former and 3C85 ferrite material" by G.M. Frey and J.A. Houldsworth, published in "Proceedings of the eleventh international PCI 86 conference", June 1986 Munich, pp. 18-24.

Generally, in this type of converter electrostatic screens between the primary and secondary windings of the converter transformer are necessary to limit the disturbing voltage at the input to an acceptable level without excessive costs. Further, a separate "clamp winding" is necessary on the primary side, while the steep flanks in the switching signal generate high-frequency disturbing voltages on the secondary side. These high-frequency disturbing voltages can be filtered out, but for effective filtering the layout in particular must satisfy very high requirements. This often leads to higher design costs and the filters also increase the cost price.

EP-A-0105541 discloses a type of flyback-converter in which these steep switching flanks are avoided and in which, without using screens, the high-frequency disturbing voltage remains very low on both the primary and the secondary side, so that the layout is non-critical and the design costs can remain low. In this known type of flyback converter, the primary self-induction and a leakage self-induction of the flyback transformer, deliberately chosen to be large, together with a resonant capacitor switched across the switching transistor, form a resonant circuit, so that the value of dV/dt remains very low, i.e. less than 200V/»sec at an operating frequency of 35 KHz, as compared with 1000V/»sec to 5000V/»sec in converters working with block-shaped signals (naturally at the same frequency). The converter known from EP-A-0105541 further operates with "zero-voltage switching", which means that the semiconductor switch is not switched on until the voltage across the switch has become zero, whereby the switching losses at switching-on are eliminated. Further, no so-called "snubber" losses occur and the switch-off losses are very low owing to said low dV/dt.

Through careful dimensioning of the circuit, at an input voltage of 200V-400V DC voltage, which conventionally arises upon rectifying and smoothing 220V-240V AC nominal mains voltage, the peak voltage across the switching element can be kept below 1250V. The effective currents also remain limited. This high peak voltage is conventional in "zero-voltage switching" resonant converters, as may for instance appear from the publication "Zero-voltage switching techniques in DC-DC converter circuits" by Fred C. Lee in "Technical Papers of the second international high frequency power conversion Conference", April 21-23, 1987 Washington D.C., page 39 in particular. This high voltage necessitates the use of bipolar switching transistors which can tolerate a blocking voltage of 1500V, which in the present state of the art means a limitation of the maximum output power to 500W when using commercially available transistors. The use of this type of transistors in parallel connection could theoretically be a solution, but presents problems owing to the switching times not being exactly the same. Also, the switching times are such that they prevent the use of a very high operating voltage.

The object of the invention is to provide a converter in which the dV/dt remains limited, so that little high-frequency disturbance is generated, but in which nevertheless the peak voltage across the switching element remains limited. As a result, commercially available power MOSFETs can be used for the switching element. The semiconductor switching elements on the primary side can further continue to operate with "zero-voltage switching", so that the switching losses also remain limited when high switching frequencies are used. Further, if desired, MOSFETs can be simply switched in parallel to increase the output power.

This object is realized by using the topology described in EP-A-0105541, but in which, via a second or auxiliary semiconductor switching element, at least one second capacitor is switched in parallel with the resonant capacitor, which second capacitor has a considerably greater capacity than the resonant capacitor and which considerably limits the peak voltage across the switching element, viz. to a value of the order of magnitude of the input voltage. This capacitor will hereinafter be referred to a clip capacitor.

According to the invention, a DC-DC converter comprising two DC voltage input terminals to which a supply voltage is applied and between which a series connection of a primary winding of the converter transformer and a main semiconductor switching element is arranged, while between the junction of said primary winding and main semiconductor switching element on the one hand and the positive and/or negative supply terminal on the other, one or more resonant capacitors are arranged, while the transformer further comprises one or more secondary winding(s) with which rectifiers and smoothing capacitors are connected, while loads can be connected to the smoothing capacitors, with the secondary winding(s) being deliberately coupled poorly with the primary winding, and the rectifiers being so arranged that they are in the conductive state when the main semiconductor switching element is in the non-conductive state, is characterized in that at least one series connection of at least one auxiliary semiconductor switching element and at least one clip capacitor is arranged, which is connected on the one hand with one of the supply terminals and on the other hand with the junction of the primary winding and the main semiconductor switching element or with a branch of the primary winding or with a separate winding which is properly coupled with the primary winding, the clip capacitor being a capacitor having a considerably larger capacity than the resonant capacitor for considerably limiting the peak voltage across the switching element, the main semiconductor switching element and the auxiliary semiconductor switching element being alternately and in non-overlapping manner in the conductive state.

The invention will now be further described with reference to the accompanying drawings, in which:
Fig. 1 is a block diagram of one embodiment of a converter according to the invention;
Fig. 2 shows a equivalent-circuit diagram for the power section of the converter of Fig. 1;
Fig. 3 schematically shows voltage and current forms occurring in operation;
Fig. 4 schematically shows an example of a possible embodiment of a control for a converter according to the invention; and
Fig. 5 shows the control characteristics associated with Fig. 4.

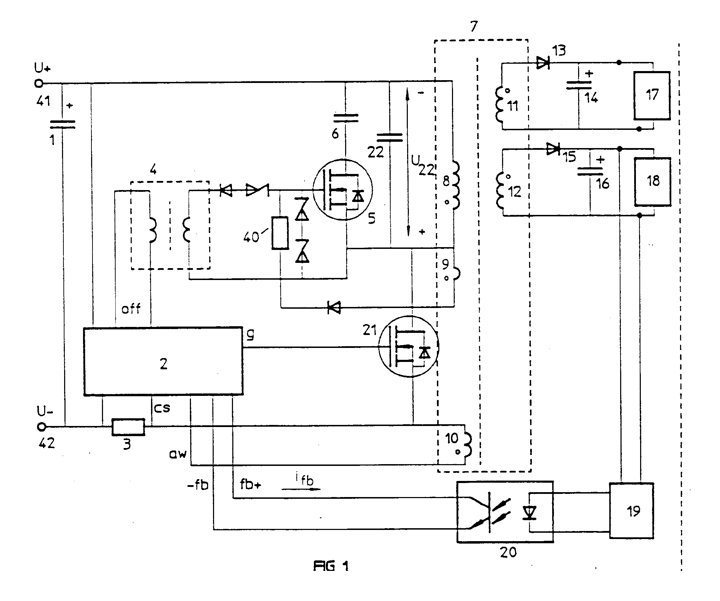

In the embodiment shown in Fig. 1, the input DC voltage U is applied to terminals 41 and 42. An uncoupling capacitor 1 may be connected between these terminals. In mains-supplied converters, the input DC voltage is obtained by rectifying and smoothing the AC mains voltage. The converter is of the flyback type, i.e. the (main) switching element 21 and rectifiers 13 and 15 on the secondary side are alternately in the conductive state. The coupling factor between the system of mutually properly coupled windings 8, 9, 10 on the primary side on the one hand and the system 11, 12 on the secondary side on the other, of transformer 7, has deliberately been kept relatively low. The leakage self-induction related to the primary coil 8 is of the same order of magnitude as the self-induction of the coil 8. Further, a resonant capacitor 22 has been arranged, while an (auxiliary) semiconductor switching element 5 connects winding 8 with a second or clip capacitor 6 during the blocking phase of switching element 21. Further, a control device 2 is present.

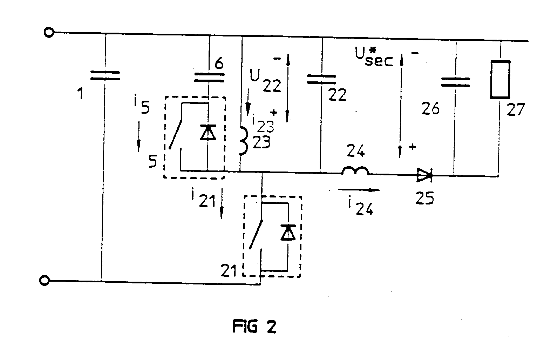

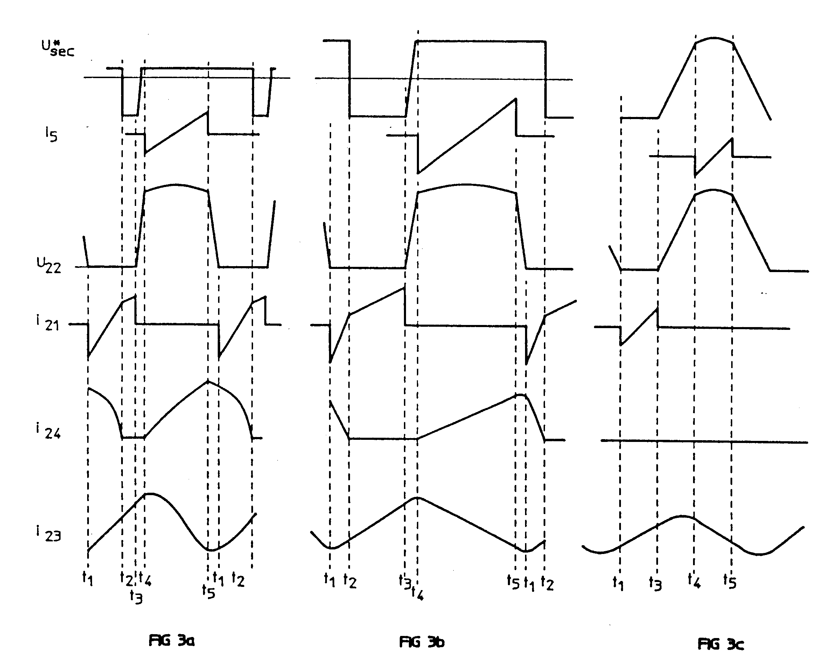

The operation will now be described with reference to the equivalent-circuit diagram of Fig. 2 and the waveforms as shown in Fig. 3.

In Fig. 2 the self-induction 23 represents the self-induction of coil 8 of Fig. 1. Self-induction 24 is the leakage self-induction relative to windings 11 and 12, related to the coil 8, while capacitor 26 and load 27, respectively, represent the the capacities 14, 16 transformed to the primary side and combined, and loads 17, 18, respectively.

Fig. 3a shows the situation directly after the start, when the smoothing capacitor 26 is still practically uncharged. Fig. 3b shows the situation at full load and stabilized output voltage. Fig. 3c shows the situation at zero load. At time t₁, the semiconductor switching element 21 is closed. At time t₃, semiconductor switch 21 leaves the conductive state. A positive current i₂₃ through self-induction 23 now charges capacitor 22 and after some time diode 25 enters the conductive state and a current starts to flow via self-induction 24. At time t₄, the diode of semiconductor switching element 5 becomes conductive. The current i₂₄ in self-induction 24 increases in interval t₄-t₅, approximately linearly with time. The current i₂₃ in self-induction 23 decreases linearly with time in this interval and changes sign. At time t₅ switching element 5 opens again. In a stable condition, the voltage across capacitor 6 will so adjust that the average current i₅ through switching element 5 is zero. Between time t₅ and t₁ capacitor 22 is charged again and from time t₁ semiconductor switching element 5 is so adjusted that the peak value of the voltage U₂₂ on capacitor 22 is precisely one diode threshold above the stabilized voltage on capacitor 26. The design parameters for the converter are now chosen such that both at starting, when the voltage across capacitor 26 runs up from zero to the stabilized value, and during operation in stabilized operation, the voltage across capacitor 22 becomes zero (or virtually zero) again after t₅, before (the diode of) main switching element 21 becomes conductive again. Only in this manner does the converter circuit have a very high efficiency and do the switching losses in the semiconductor switching element 21 remain limited to an extreme minimum. The capacity of clip capacitor 6 can in practice be three to ten times larger than that of capacitor 22 and the leakage self-induction 24 can be about one-fifth to one time the self-induction of 23. The output voltage U*_{sec} transformed to the primary side can be one-third to one time the input voltage. The converter can alternatively be supplied with a non-smoothed DC voltage. Then, the conduction time of switching element 21 can be so controlled that the mains from which the DC voltage is obtained through rectifying, is ohmically loaded. In this case, the ratio between the transformed output voltage U*_{sec} and the input voltage U can run up to a factor thirty.

After time t₅, the current in leakage self-induction 24 tends to decrease very rapidly by the relatively high inverse voltage across the leakage self-induction that arises. This inverse voltage is typically a factor five higher than the voltage in interval t₄-t₅. A sufficiently high current in self-induction 23 at time t₅ can now take care of the voltage across capacitor 22 being reversed, so that "zero-voltage switching" of semiconductor switch 21 is ensured. A sufficiently high current in self-induction 23 can be achieved by making the time interval t₄-t₅ sufficiently long.

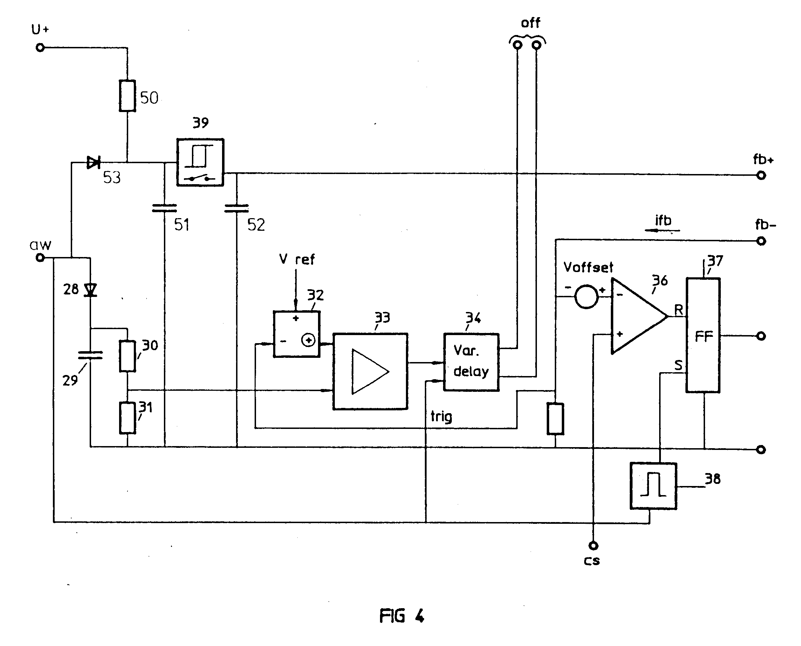

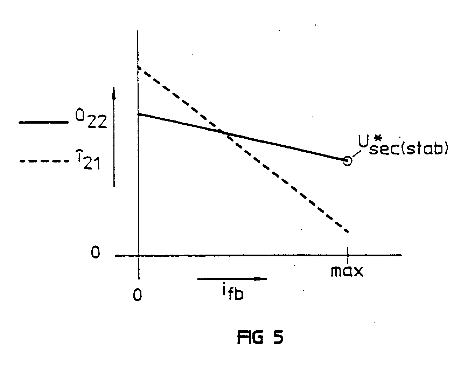

The simplest way of starting is that whereby the maximum value of the current i₂₁ through the switching element 21 is limited, i.e. that each time a predetermined maximum current through the switching element is detected, the switching element 21 is brought into the non-conductive state by the control device 2. The current through the switching element can be detected for instance by measuring the voltage across resistor 3. A possible embodiment of the control 2 is shown in Fig. 4. Fig. 5 shows the associated control characteristics for the case where a constant output voltage at varying output load and input voltage is desired. A control amplifier 19 compares the desired value of the output voltage with the actual value. If the actual value exceeds the desired value, via the optocoupler 20 a signal is issued to the control device 2, which is greater according as the (integrated) deviation between desired and actual value is greater.

The control amplifier can be calculated according to the conventional design methods and may for instance be of the PID type, which can be so dimensioned that the control loop is stable under all combinations of input voltage and output voltage, while the static and dynamic deviations of the output voltages are minimal. The feedback signal which is supplied via the optocoupler 20 to the control device 2 now sets the value of the current at which the switch 21 is switched off and controls the peak value Û₂₂ of the voltage U₂₂ across capacitor 22 according to a characteristic as shown in Fig. 5. At maximum feedback current i_{fb} the converter is set at minimum power and U₂₂ is approximately equal to the stabilized voltage U*_{sec}. This control function is realized in Fig. 4 as follows:

Flip-flop 37 drives switch 21. At the end of the descending flank of the AC voltage on auxiliary winding 10 (signal aw), which is in phase with the voltage on winding 8, so at time t₁, a pulse former 38 issues a set signal S to the flip-flop 37, so that the gate drive signal "g" for MOSFET switching element 21 becomes high. As soon as the current through switching element 21, measured via resistor 3 and detected via signal cs, exceeds a value determined by the feedback current i_{fb}, a comparator 36 generates a reset pulse R and the gate drive signal "g" becomes low.

After reversing the voltage across capacitor 22, the diode of MOSFET switching element 5 becomes conductive and, via an auxiliary winding 9 and a resistor 40, the gate drive signal of MOSFET switching element 5 also becomes high. On the ascending flank of the signal on auxiliary winding 10, a delay circuit 34 is started. At a time after starting which is determined by a control amplifier 33, this circuit gives, via signal terminals "off" and a pulse transformer 4, a switch-off impulse to MOSFET switching element 5. Thereafter, the voltage across capacitor 22 reverses and also the drive via the auxiliary winding 9 falls away.

The control loop consisting of diode 28, capacitor 29, voltage divider 30,31; difference amplifier 32; control amplifier 33 and delay circuit 34, now influences the duration of conduction of switching element 5 in such a manner that the desired peak value of U₂₂ is reached. The voltage across auxiliary winding 10 is a measure for the voltage across self-induction 23. A shortening of the length of conduction of MOSFET 5 leads to a higher peak value of U₂₂; after a prolongation of the conduction period to a lower peak value. The resonance capacitor 22 and the clip capacitor 6 can be connected both to the positive input terminal 41 and to the negative input supply terminal 42. To enable a more optimal adjustment of voltage levels, the switching element 21 or the switching element 5 can also be connected to a branch of winding 8 or with an additional winding properly coupled with winding 8. Further, more than one clip capacitor can be used.

The supply of the control circuit can in known manner be of the "bootstrap" type. Via a high-ohmic resistor 50 a capacitor 51 is charged. After achieving a certain voltage level, a switching block 39, which blocked initially, connects through and a capacitor 52 is also charged. Then the circuit is supplied, via the converter which is then in operation, from auxiliary winding 10 whose voltage is rectified by a diode 53.

## Claims

1. A DC-DC converter comprising two DC voltage input terminals (41, 42) to which a supply voltage is applied and between which a series connection of a primary winding (8, 9, 10) of the converter transformer (7) and a main semiconductor switching element (21) are arranged, while between the junction of said primary winding (8, 9, 10) and main semiconductor switching element (21) on the one hand and the positive and/or negative supply terminal (41, 42) on the other, one or more resonant capacitors (22) are arranged, while the transformer (7) further comprises one or more secondary winding(s) (11, 12) with which rectifiers (13, 15) and smoothing capacitors (14, 16) are connected, while loads (17, 18) can be connected to the smoothing capacitors (14, 16), with the secondary winding(s) (11, 12) being deliberately coupled poorly with the primary winding (8, 9, 10), and the rectifiers (13, 15) being so arranged that they are in the conductive state when the main semiconductor switching element (21) is in the non-conductive state, characterized in that at least a series connection of at least one auxiliary semiconductor switching element (5) and at least one clip capacitor (6) is arranged, which is connected on the one hand with one of the supply terminals (41, 42) and on the other hand with the junction of the primary winding (8, 9) and the main semiconductor switching element (21) or with a branch of the primary winding (8, 9, 10) or with a separate winding which is properly coupled with the primary winding (8, 9, 10), the clip capacitor (6) being a capacitor having a considerably larger capacity than the resonant capacitor (22) for considerably limiting the peak voltage across the switching element (21), the main semiconductor switching element and the auxiliary semiconductor switching element being alternately and in non-overlapping manner in the conductive state.

2. A converter according to claim 1, characterized in that the clip capacitor (6) comprises two or more capacitors, which are each connected with one connection to the positive and/or negative supply terminal (41, 42).

3. A converter according to claim 1 or 2, characterized in that the converter is so dimensioned that under all load conditions, including short-circuiting of the output terminals and input voltages which can occur in operation, the auxiliary semiconductor switching element (5) does not enter the conductive state until the voltage across the auxiliary semiconductor switching element (5) has oscillated back to zero or at least to a voltage which is much lower than the supply voltage, and that the main semiconductor switching element (21) is not brought into the conductive state until the voltage across it has oscillated back at least to a voltage which is much lower than the supply voltage, so that both for the auxiliary semiconductor switching element (5) and for the main semiconductor switching element (21) mainly "zero-voltage switching" is used.

4. A converter according to claim 1, 2, or 3, characterized in that the transmitted power of the converter is controllable by means of the current level at which the main semiconductor switching element (21) is brought into the non-conductive state (current mode control).

5. A converter according to claim 4, characterized in that the peak voltage across the primary winding (8, 9, 10) of the converter transformer (7) in the conduction period of the auxiliary semiconductor switching element (5) is controllable by means of the duration of conduction of the auxiliary semiconductor switching element (5).

6. A converter according to claim 5, arranged to provide a stabilized output voltage, characterized in that means (2) are provided for simultaneously influencing the value of the current at which the main semiconductor switching element (21) is switched off and the level of the peak voltage across the primary winding (8, 9, 10) of the converter transformer (7).

## Patentansprüche

1. Gleichstromwandler mit zwei Gleichspannungseingangsklemmen (41, 42), denen eine Speisespannung zugeführt wird und zwischen denen eine Reihenschaltung einer Primärwicklung (8, 9, 10) des Wandlertransformators (7) und ein Haupthalbleiterschaltelement (21) angeordnet sind, während zwischen dem Knotenpunkt der Primärwicklung (8, 9, 10) und des Haupthalbleiterschaltelements (21) einerseits und der positiven und/oder negativen Speiseklemme (41, 42) andererseits ein oder mehrere Resonanzkondensatoren (22) angeordnet sind, während der Transformator (7) weiter eine oder mehrere Sekundärwicklungen (11, 12) aufweist, mit der bzw. denen Gleichrichter (13, 15) und Beruhigungskondensatoren (14, 16) verbunden sind, während an die Beruhigungskondensatoren (14, 16) Belastungen (17, 18) angeschlossen werden können, wobei die Sekundärwicklung(en) (11, 12) bewußt schlecht mit der Primärwicklung (8, 9, 10) gekoppelt ist bzw. sind und die Gleichrichter (13, 15) so angeordnet sind, daß sie sich im leitenden Zustand befinden, wenn das Haupthalbleiterschaltelement (21) sich im nichtleitenden Zustand befindet, dadurch gekennzeichnet, daß mindestens eine Reihenschaltung mindestens eines Hilfshalbleiterschaltelements (5) und mindestens eines Clipkondensators (6) angeordnet ist, der einerseits mit einer der Speiseklemmen (41, 42) und andererseits mit dem Knotenpunkt der Primärwicklung (8, 9) und des Haupthalbleiterschaltelements (21) oder mit einer Abzweigung der Primärwicklung (8, 9, 10) oder mit einer gesonderten, gut mit der Primärwicklung (8, 9, 10) gekoppelten Wicklung verbunden ist, wobei der Clipkondensator (6) eine Kapazität aufweist, die erheblich größer als die des Resonanzkondensators (22) ist, so daß die Spitzenspannung über das Schaltelement (21) erheblich beschränkt wird, wobei das Haupthalbleiterschaltelement und das Hilfshalbleiterschaltelement sich abwechselnd und nichtüberlappend im leitenden Zustand befinden.

2. Wandler nach Anspruch 1, dadurch gekennzeichnet, daß der Clipkondensator (6) zwei oder mehrere Kondensatoren aufweist, die je mit einem Anschluß an die positive und/oder negative Speiseklemme (41, 42) angeschlossen sind.

3. Wandler nach Anspruch 1 oder 2, dadurch gekennzeichnet, daß der Wandler so bemessen ist, daß unter allen Belastungsbedingungen, einschl. Kurzschluß der Ausgangsklemmen und Eingangsspannungen, die im Betrieb auftreten können, das Hilfshalbleiterschaltelement (5) erst in den leitenden Zustand gelangt, wenn die Spannung über das Hilfshalbleiterschaltelement (5) auf Null oder mindestens auf eine Spannung, die viel niedriger als die Speisespannung ist, zurückgeschwungen hat, und daß das Haupthalbleiterschaltelement (21) erst in den leitenden Zustand gebracht wird, wenn die Spannung darüber mindestens auf eine Spannung, die viel niedriger als die Speisespannung ist, zurückgeschwungen hat, so daß sowohl für das Hilfshalbleiterschaltelement (5) als auch für das Haupthalbleiterschaltelement (21) im wesentlichen "Nullspannungsschaltung" verwendet wird.

4. Wandler nach Anspruch 1, 2 oder 3, dadurch gekennzeichnet, daß die übertragene Leistung des Wandlers mittels des Stromniveaus steuerbar ist, wobei das Haupthalbleiterschaltelement (21) in den nicht-leitenden Zustand gebracht wird.

5. Wandler nach Anspruch 4, dadurch gekennzeichnet, daß die Spitzenspannung über die Primärwicklung (8, 9, 10) des Wandlertransformators (7) in der Leitungsperiode des Hilfshalbleiterschaltelements (5) mittels der Leitungsdauer des Hilfshalbleiterschaltelements (5) steuerbar ist.

6. Wandler nach Anspruch 5 zur Erzeugung einer stabilisierten Ausgangsspannung, dadurch gekennzeichnet, daß Mittel (2) vorgesehen sind, den Wert des Stromes, wobei das Haupthalbleiterschaltelement (21) ausgeschaltet wird, und das Niveau der Spitzenspannung über die Primärwicklung (8, 9, 10) des Wandlertransformators (7) gleichzeitig zu beeinflussen.

## Revendications

1. Un convertisseur continu-continu comprenant deux bornes d'entrée de tension continue (41, 42) auxquelles on applique une tension d'alimentation et entre lesquelles sont disposées la connexion en série d'un enroulement primaire (8, 9, 10) du convertisseur transformateur (7) et un élément principal de commutation à semi-conducteurs (21), tandis qu'entre la jonction dudit enroulement primaire (8, 9, 10) et de l'élément principal de commutation à semi-conducteurs (21) d'une part et la borne d'alimentation positive et/ou négative (41, 42) d'autre part, un ou plusieurs condensateurs en résonance (22) sont disposés, tandis que le transformateur (7) comprend en plus un ou plusieurs enroulements secondaires (11, 12) auxquels sont connectés les redresseurs (13, 15) et les condensateurs de lissage (14, 16), tandis que des charges (17, 18) peuvent être connectées aux condensateurs de lissage (14, 16), les enroulements secondaires (11, 12) étant volontairement mal connectés à l'enroulement primaire (8, 9, 10), et les redresseurs (13, 15) étant disposés de telle façon qu'ils sont dans l'état passant lorsque l'élément principal de commutation à semi-conducteurs (21) est dans l'état non-conducteur, caractérisé en ce qu'au moins une connexion en série d'au moins un élément secondaire de commutation à semi-conducteurs (5) et d'au moins un condensateur encliquetable (6) est prévue, qui est connectée d'une part à une des bornes d'alimentation (41, 42) et d'autre part à la jonction de l'enroulement primaire (8, 9) et de l'élément principal de commutation à semi-conducteurs (21) ou à une branche de l'enroulement primaire (8, 9, 10) ou à un enroulement séparé qui proprement couplé à l'enroulement primaire (8, 9, 10), le condensateur encliquetable (6) étant un condensateur ayant une capacité considérablement plus grande que le condensateur de résonance (22) afin de limiter fortement la tension de pointe aux bornes de l'élément de commutation (21), I'élément principal de commutation à semi-conducteurs et l'élément secondaire de commutation à semi-conducteurs étant alternativement et sans recouvrement dans l'état passant.

2. Un convertisseur suivant la revendication 1, caractérisé en ce que le condensateur encliquetable (6) comprend deux ou plusieurs condensateurs, qui sont chacun connectés par une borne à la borne positive et/ou à la borne négative d'alimentation (41, 42).

3. Un convertisseur suivant la revendication 1 ou 2, caractérisé en ce que le convertisseur est dimensionné de telle façon que dans toutes les conditions de charge, y compris de court-circuit des bornes de sortie et des tensions d'alimentation pouvant se produire en fonctionnement, I'élément secondaire de commutation à semi-conducteurs (5) ne passe pas à l'état passant tant que la tension aux bornes de l'élément secondaire de commutation à semi-conducteurs (5) n'est pas revenue à zéro ou au moins à une tension qui est beaucoup plus basse que la tension d'alimentation, et en ce que l'élément principal de commutation à semi-conducteurs (21) n'est pas mis dans l'état passant tant que la tension à ses bornes n'est pas revenue au moins à une tension qui est beaucoup plus basse que la tension d'alimentation, de sorte que, à la fois pour l'élément secondaire de commutation à semi-conducteurs (5) et pour l'élément principal de commutation à semi-conducteurs (21), on emploie principalement une "commutation à tension nulle".

4. Un convertisseur suivant la revendication 1, 2 ou 3, caractérisé en ce qu'on peut contrôler la puissance transmise par le convertisseur à l'aide du niveau de courant auquel l'élément principal de commutation à semi-conducteurs (21) est mis dans l'état non conducteur (mode de contrôle de courant).

5. Un convertisseur suivant a revendication 4, caractérisé en ce qu'on peut contrôler la tension de pointe aux bornes de l'enroulement primaire (8, 9 ,10) du convertisseur transformateur (7) dans la période de conduction de l'élément secondaire de commutation à semi-conducteurs (5) au moyen de la durée de conduction de l'élément secondaire de commutation à semi-conducteurs (5).

6. Un convertisseur suivant la revendication 5, disposé de manière à fournir une tension de sortie stabilisée, caractérisé en ce qu'on fournit un moyen (2) d'influencer simultanément la valeur du courant auquel l'élément principal de commutation à semi-conducteurs (21) est mis hors service et le niveau de la tension de pointe aux bornes de l'enroulement primaire (8, 9, 10) du convertisseur transformateur (7).
